# EUROPEAN PATENT APPLICATION

(11) **EP 4 644 656 A2**
(43) Date of publication of application: **05.11.2025**
(21) Application number: 25203085.3
(22) Date of filing: 18.12.2024
(51) Int. Cl.: E06B 7/14

(54) **A ROOF WINDOW WITH A SEALING SYSTEM**

(30) Priority: 18.12.2023 DK PA202370624
(62) Divisional of application: 24221076.3
(71) Applicant: VKR Holding A/S, 2970 Hørsholm (DK)
(72) Inventor: Nygaard, Michael, 2970 Hørsholm (DK); Lysemose, Jacob, 2970 Hørsholm (DK)
(74) Representative: AWA Denmark A/S

(57) **Abstract**

A roof window (1) comprising a frame (2), a sash (3), a pane (4), and a sealing system (5) is disclosed. The frame (2) comprises an adaptor member (24) attached at the inner side (211) of the at least one frame member, the adaptor member being used for fixation of a primary gasket (51) and/or for attachment of a secondary gasket (52). The adaptor member (24) may further be used for receiving a lining panel and/or may comprise a heat conductor component.

## Description

### Technical Field

The present invention relates to a roof window comprising a frame, a sash, a pane, and a sealing system; where the frame comprises a plurality of frame members delimiting a frame opening, each frame member being elongate with a length axis extending along the frame opening, and each frame member having an inner side, an outer side, an interior side, and an exterior side, said inner side facing the frame opening, said outer side being opposite the inner side and facing away from the frame opening, said interior side being adapted for facing an interior of a building in a mounted state of the roof window, and said exterior side being opposite the interior side and facing away from the interior of the building in a mounted state of the roof window; where the pane is attached to the sash and covers the frame opening; and where the sealing system comprises a primary gasket arranged on the exterior side of at least one frame member, extending along the length axis and comprising a base part, a first projecting part, and a second projecting part, said base part extending over and covering the exterior side of at least one frame member from the inner side to the outer side, and each of said first projecting part and said second projecting part extending along the length axis, projecting away from the at least one frame member, with the first projecting part being located closer to the inner side than the second projecting part, and the second projecting part being in contact with a least one of the sash and the pane.

### Background Art

Roof windows of this kind are known from the applicant's prior patent application US2005/0126093A1 and is designed for use in roofs with a very low inclination, often referred to as flat roofs. The use of a sealing gasket having two projecting parts, each defining a sealing plane between the interior of the building and the exterior, means that there is a double hinderance against wind and water reaching into the building from the exterior and against warm interior air with a high moisture content reaching colder regions between the frame and the sash unit consisting of the sash and the pane. Even with a careful mounting and maintenance of the sealing gasket, the formation of condensation in the space between the frame and the sash unit, however, remains a problem. This is especially the case in opening roof windows, where the sash unit is moveable in relation to the frame, so that it comes out of contact with the sealing gasket.

### Summary of Invention

With this background, it is an object of the invention to provide a roof window by which the risk of accumulation of water in the space between the frame and the pane and/or sash is reduced.

This and further objects are achieved with a roof window of the kind mentioned in the introduction, where a relief opening is present at a free edge of the first projecting part distal to the exterior side of the at least one frame member, where the sealing system further comprises an inner gasket part projecting away from the at least one frame member, said inner gasket part being in contact with the pane and being located closer to the inner side of the at least one frame member than the first projecting part, where each of said first projecting part, said second projecting part and said inner gasket part extends along the length axis, where said inner gasket part encircles the frame opening and defines a first sealing plane, where a sealing space is defined between the first sealing plane and a second sealing plane formed by the second projecting part, and where a ventilation passage extends through the second sealing plane.

The relief opening is located either between the first projecting part and an interior side of the pane facing the interior of the building in a mounted state of the roof window or between the first projecting part and a part of the sash projecting along the interior side of the pane.

The inner gasket part forms a first sealing plane, and the second projecting part forms a second sealing plane between the interior of the building and the exterior of the building. They thus form a sealing space between them, and the first projecting part divides the sealing space into two chambers. The division into two chambers, which are interconnected via the relief opening, allows each chamber to function as a pressure relief for the other, reducing the risk of fluid transport in a width direction from the inner side to the outer side or vice versa. Thereby the risk of moisture reaching from the interior of the building to colder areas in the space between the frame and the sash unit is reduced, the coldest areas typically being located furthest from the inner side. Furthermore, the sealing space with two chambers may contribute to the thermal insulating properties of the roof window, whereby improving the U-value of the roof window.

Whereas the inner gasket part encircles the frame opening entirely, so that hot and moist air from the interior of the building does not pass the first sealing plane, at least a part of the primary gasket is interrupted wholly or partially, forming a ventilation passage connecting to an exterior. This allows any moisture, which has reached into the sealing space to escape to the exterior, i.e. to the surroundings of the building. As the amounts of moisture reaching the sealing space will usually be limited, ventilation will usually be enough to remove it. It is, however, to be understood that the ventilation passage may also be used for draining off liquid water.

In one embodiment, a separate primary gasket extends along each frame member, extending along the length of the inner side. The length of these primary gaskets along the outer sides of the respective frame members may correspond to the length of the outer sides, the end of each of these primary gaskets extending at a 45-degree angle so that the primary gaskets meet in a mitre joint. In another embodiment, a first set of primary gaskets have a length corresponding to the length of the outer sides of the respective frame members and a second set have a length corresponding to the length of the inner sides of the respective frame members, so that the primary gaskets of the first set cover the corners of the frame. In a further embodiment, each primary gasket has a length, which is longer that the length of the inner side and shorter than the length of the outer side of the respective frame member, so that each primary gasket covers the length of the respective frame member along the inner side and covers one corner of the frame. In a still further embodiment, each primary gasket has a length corresponding to the length of the inner side of the respective frame member, and separate corner gaskets cover the corners of the frame.

If using separate corner gaskets without a part corresponding to the second projecting part of the primary gasket, the entire corner gasket may serve as the ventilation passage. If at least one primary gasket has a length corresponding to the length of the outer sides of the respective frame members, and if this primary gasket has a substantially uniform cross-sectional shape over its entire length, the second projecting part will be interrupted at the end and a ventilation passage will thus be formed at the end, extending in continuation of the length axis. If primary gaskets meet in a mitre joint at the corners, the second projecting part of at least one of the meeting primary gaskets may be interrupted to form the ventilation passage. The ventilation passage does not necessarily need to be located at a corner / the corners of the roof window. The second projecting part could alternatively or additionally be interrupted at a distance from the / a corner to form a ventilation at a side of the roof window.

Each of the primary gaskets may extend along the entire length of at least the inner side of respective frame member, but it may also be expedient or necessary to interrupt one or more of them completely, for example to make room for hinges or for an operator used for opening and closing the roof window. A partial interruption, i.e. an interruption of only a part of the primary gasket, may also be used, for example interrupting only the base part to allow an operator to pass through it or only the second projecting part to make room for a hinge.

In embodiments where primary gaskets meet each other, a ventilation passage may be provided between them at the joint. Similarly, a ventilation passage may be provided at a joint between a primary gasket and a corner gasket. Alternatively, or additionally, an opening configured for serving as a ventilation passage may be provided in the second projecting part.

In embodiments comprising separate corner gaskets, each corner gasket may be provided with one or more joint flanges configured for overlapping with a primary gasket of the sealing system. This may contribute to water tightness, which will be particularly relevant if a ventilation passage is provided at the joint, and/or may contribute to keeping the gaskets of the sealing system in their intended positions. In addition, or alternatively, a strip of an adhesive or a joint sealing compound may be provided between a corner gasket and a primary gasket. As an example, butyl may be used for this purpose.

A corner gasket may be provided with a diverter, such as an elongate projection, configured for diverting water and/or wind. A diverter may for example contribute to diverting liquid water towards a ventilation passage. In one embodiment, a diverter extends from the inner side of the frame towards the outer side of the frame. One or more diverters may also be provided on a primary gasket.

While an embodiment with several primary gaskets used in combination with corner gaskets is presently considered advantageous, it is to be understood that one primary gasket may extend along all frame members, so that it encircles the frame opening. Such a primary gasket may comprise corner sections providing the same function as the corner gasket described.

The inner gasket part may be a third projecting part of the primary gasket or a part of a separate secondary gasket attached to the frame. Advantages of providing the inner gasket part as a part of the primary gasket include that the mutual positions of the first projecting part, the second projecting part, and the inner gasket part are well-defined and durable and that there are fewer joints than with a separate secondary gasket. Advantages of providing the inner gasket part as a part of a separate secondary gasket include increased design freedom and the possibility for replacement of the inner gasket part without affecting the primary gasket and vice versa. A separate secondary gasket may be one single gasket extending along the length of the inner sides of all frame members, thereby encircling the frame opening.

In one embodiment, the first projecting part is a lip projecting from the base part. The lip may project perpendicular to the base part, but it is presently considered advantageous, at least for use in cold climates, that the lip is elastic and projects at an acute angle relative to the base part, projecting towards the inner side of the at least one frame member. When the roof window is mounted in a cold climate, the interior temperature inside the building will usually be higher than the exterior temperature outside the building. This may result in an over-pressure on the interior side, which may force hot, moist air into the sealing space. An elastic lip angled towards the inner side of the frame may provide a counter-pressure and/or may divert air away from the relief opening.

In one embodiment, the second projecting part is hollow, comprising an inner cavity extending along the length axis. This provides good sealing properties by providing a high degree of compressibility and a relatively large contact area against the pane and/or sash compared to a lip. Walls or the like may be provided inside the cavity to provide the second projecting part with a desired compressibility, possibly providing a higher strength or stiffness against deformation in specific directions to allow the second projecting part to deform in a desired way when compressed.

In one embodiment, at least one of a primary gasket, a corner gasket, and a secondary gasket comprises at least one attachment member configured for attachment to the frame. The attachment member may for example be an elastic projection fitting into an opening in a frame member, such as an elongate projecting fitting into a groove.

In one embodiment, the frame comprises an adaptor member attached at the inner side of at least one frame member. The adaptor member may for example be used for fixation of a primary gasket, for attachment of a secondary gasket, and/or for receiving a lining panel.

The frame member may be made from wood or a wood-based material and/or may comprise a core made from an insulating material. Since the primary gasket covers the exterior side, the frame member may be a sandwich structure with the layers extending perpendicular to the plane defined by the frame opening.

The frame members may have a substantially rectangular cross-sectional shape while one or more adaptor members is/are used for providing the frame with a more complex shape.

The adaptor member may be used for fixation of a primary gasket, for example by the primary gasket being clamped between the adaptor member and a frame member. In one embodiment the adaptor member comprises an exterior leg extending over the exterior side of the frame member and the primary gasket is clamped between the exterior leg and the frame member. The exterior leg may comprise openings allowing fasteners, such as screws, to be passed through the exterior leg, through the primary gasket, and into the frame member. The primary gasket may, however, also be attached directly to the adaptor member, for example by inserting an elastic projection on the primary gasket into an opening in the adaptor member or vice versa.

The adaptor member may be used for attachment of a secondary gasket by the secondary gasket being attached to the adaptor member, for example extending in a groove in the adaptor member. Providing the secondary gasket on an exterior side of the adaptor member facing away from the frame member may allow the secondary gasket to be elevated above the exterior side of the frame member. This may in turn allow the secondary gasket to have relatively small cross-sectional dimensions compared to the cross-sectional dimensions of the sealing space at least along the height axis. Generally, the deformation of a gasket having smaller cross-sectional dimensions is easier to control than the deformation of a gasket having larger cross-sectional dimensions. Smaller dimensions are therefore considered advantageous for the inner gasket part, which needs to provide a vapour proof seal towards the interior of the building.

The adaptor member may be used for receiving a lining panel by forming a groove between a frame member and the adaptor member. For this purpose, the adaptor member may comprise a leg extending in parallel with and at a distance from the inner side of a frame member.

The adaptor member preferably comprises a heat conductor component made from a material having a high thermal conductivity, for example of more than 50 W/m·K. Such a heat conductor component will be capable of transporting heat from a warmer area to a colder area. When the exterior temperature is lower than the interior temperature inside the building, this will allow the adaptor member to distributing heat from the interior of the building to where the secondary gasket meets the pane, potentially increasing the temperature at the pane by 1°C to 4°C. The increased temperature at the pane may reduce the formation of condensation in the area along the frame, whereby reducing the risk of damage to the frame caused by moisture.

In one embodiment, the heat conductor component is made from a material having a thermal conductivity between 30-430 W/m·K, more preferably between 90-350 W/m·K, and even more preferably between 150-300 W/m·K.

Thermal conductivity is here indicated as k-values, also known as λ-values, measured in W/m·K in accordance with standard ISO 8302. U-values, also known as thermal transmittance and measured in W/m²·K, may also be used to indicate thermal properties of a component or structure. The U-value, however, relies on the dimensions of the building structures, therefore is not an intrinsic property of the material.

In one embodiment, the heat conductor component is made of aluminium, copper, other metals, a polymer, a mixture of polymers or a composite material. While aluminium is presently the preferred material, having a k-value of approximately 150-250 W/m·K, the heat conductor component can be made of other materials with similar thermal conductivity properties. Pure virgin aluminium has a relatively high thermal conductivity and could therefore be preferred for this purpose, but recycled aluminium or aluminium alloys may be preferred, as they may provide other needed properties than just thermal conductivity.

The heat conductor component may be smaller part of the adaptor member, preferably being located on or at an inner surface of the adaptor member, which is exposed to the interior of the building in the mounted state of the roof window. It is, however, also possible to make the entire adaptor member, or substantially the entire adaptor member, of a high thermal conductivity material, such as aluminium.

In one embodiment, an adaptor member made of a polymer component with a heat conductor component in the form of an aluminium plate attached to it, said aluminium plate being provided on an inner side of the adaptor member and forming an exposed surface of adaptor member.

In another embodiment the adaptor member is an extruded aluminium profile having an inner cavity filled with another material, such as an insulating material.

An adaptor member made substantially entirely from a high thermal conductivity material, being for example an extruded aluminium profile with an empty inner cavity, meaning that the entire adaptor member serves as the heat conductor component.

The adaptor member may be provided with a surface treatment, such as paint or lacquer. The surface treatment may contribute to the thermal conductivity or reduce it depending on the material chosen.

The embodiments and advantages described with reference to the adaptor member are advantageous also in other types of roof windows, and should therefore not be considered as being limited to use with roof windows according to claim 1. The use of the adaptor member may be beneficial to any roof window comprising a frame, a sash, a pane, and a sealing system, where the frame comprises a plurality of frame members delimiting a frame opening, each frame member being elongate with a length axis extending along the frame opening, and each frame member having an inner side, an outer side, an interior side, and an exterior side, said inner side facing the frame opening, said outer side being opposite the inner side and facing away from the frame opening, said interior side being adapted for facing an interior of a building in a mounted state of the roof window, and said exterior side being opposite the interior side and facing away from the interior of the building in a mounted state of the roof window, and where the pane is attached to the sash and covers the frame opening.

In one embodiment, the roof window comprises a set of hinges connecting the sash to the frame and allowing the sash to be moved in relation to the frame between a closed state of the roof window and an open state of the roof window, where the pane covers the frame opening in the closed state of the roof window.

In some opening roof windows, the sash unit remains in contact with the frame even in the open state. In such roof windows, the frame member extending along the hinge axis, i.e. the frame members at which the hinges are located, may be without a primary gasket.

In one embodiment, the roof window comprises an operator extending between the frame and the sash, and the primary gasket is interrupted at least partially at the operator. The operator may be motor driven to allow opening and closing of a roof window, which is out of reach and/or too heavy for manual operation.

While the primary gasket(s) may be interrupted wholly or partially, it is presently considered advantageous that the exterior side of the frame formed by the exterior sides of the frame members is covered substantially entirely by the primary gasket(s). This will protect the frame members, potentially allowing them to be made of a wider range of materials having a lower resistance to moisture. Furthermore, cleaning and maintenance may be facilitated.

### Brief Description of Drawings

In the following description embodiments of the invention will be described with reference to the schematic drawings, in which
Fig. 1 is a perspective view of a roof window,
Fig. 2 corresponds to Fig. 1 but showing only the frame of the roof window,
Fig. 3 corresponds to a cross section along the line III-III in Fig. 1, only showing a different embodiment with a higher frame,
Fig. 4 corresponds to Fig. 3, but seen from a different angle and showing the roof window in Fig. 1,
Fig. 5a shows the detail marked V in Fig. 2,
Fig. 5b shows an alternative version of the detail marked V in Fig. 2,
Fig. 6 is a perspective view of a corner gasket attached to the frame,
Fig. 7 is a perspective view showing the engagement between a primary gasket and a corner gasket seen from two different angles,
Fig. 8 is a perspective view showing the engagement between a primary gasket and a corner gasket while mounted on the frame,
Fig. 9 is a partially cut-away cross section corresponding to a cross section along the line IX-IX in Fig. 1, only showing a different embodiment with a higher frame,
Fig. 10 shows the detail marked X in Fig. 2,
Fig. 11 and Fig. 12 show the primary gasket in cross-sectional views along the line IX-IX in Fig. 1 seen from two different angles,
Fig. 13 shows isotherms in a cross section of a roof window,
Fig. 14 corresponds to Fig. 13, but with a different adaptor member, and
Fig. 15 show schematic representations of adaptor members in cross-section.

### Description of Embodiments

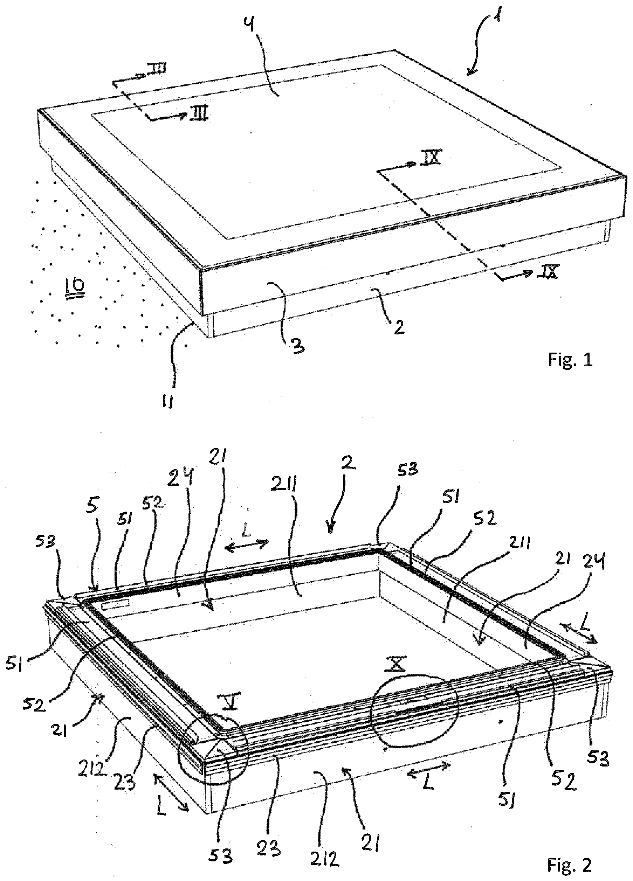

Referring initially to Fig. 1, a roof window 1 comprising a frame 2, a sash 3, and a pane 4 is shown mounted on a roof 10 of a building. Flashing members (not shown) will be installed to cover the joint 11 between the roof 10 and the frame 2 of the roof window.

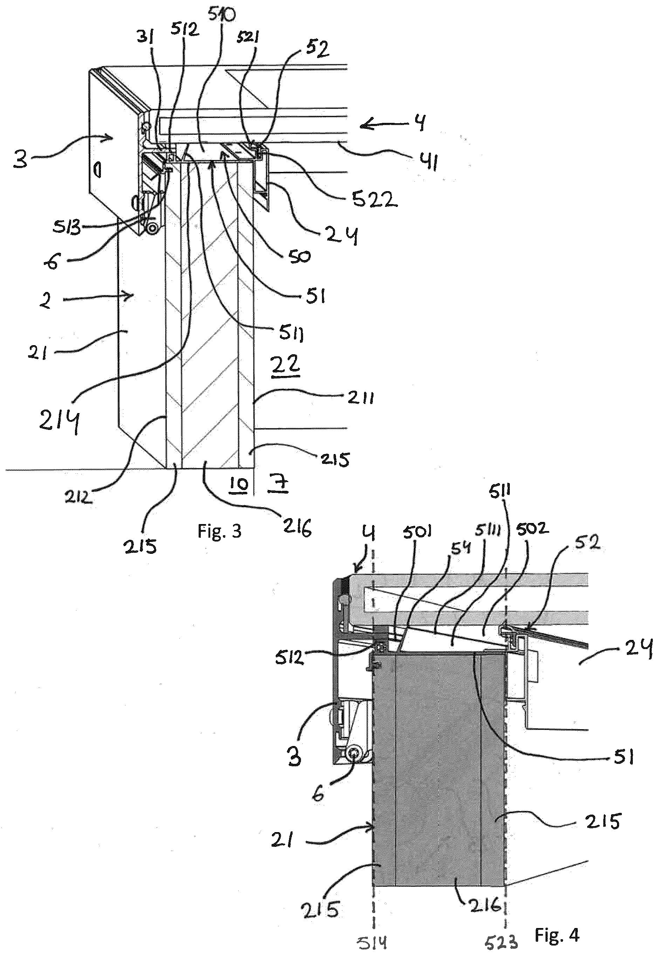

The frame 2, which is shown alone in Fig. 2, comprises a plurality of frame members 21 delimiting a frame opening 22, each frame member being elongate with a length axis L extending along the frame opening. Each frame member 21 has an inner side 211 facing the frame opening 22, and an outer side 212 being opposite the inner side and facing away from the frame opening. Further, as shown in Fig. 3, each frame member 21 has an interior side 213 facing an interior 7 of the building, said interior side facing downwards in Fig. 3, and an exterior side 214 being opposite the interior side and facing away from the interior of the building, towards the exterior. Cover profiles 23 configured for overlapping with flashing members (not shown) to establish a waterproof joint between the roof window 1 and the roof 10 are provided on the outer sides 212 of the frame members 21.

As is also seen in Fig. 3, which shows a roof window with a higher frame 2, the pane 4 is attached to the sash 3 and covers both the frame opening 22 and the exterior side 214 of the frame members 21. The roof windows 1 shown in Fig. 1 and Fig. 3 are opening windows, where a set of hinges connects the sash 3 to the frame 2. One of the hinges 6 is seen in Fig. 3. This allows the sash unit comprising the sash 3 and the pane 4 to be moved in relation to the frame between a closed state of the roof window, as shown in Fig. 1, and an open state of the roof window.

In the following, only differences between the roof windows in Fig. 1 and Fig. 3 will be described. All other features are to be understood as being identical in the two roof windows.

A sealing system 5 seals the gap between the frame 2 and the sash unit. In the embodiment shown, the sealing system comprises a primary gasket 51 extending over the exterior side 214 of each frame member 21 and a secondary gasket 52 attached to an adaptor member 24 at the inner side 211 of the frame member 21. The adaptor member is attached to the frame member 21 and forms part of the frame 2. As is seen in Fig. 2, the sealing system 5 here comprises four separate primary gaskets 51, each extending along the length axis L of a respective frame member 21, and four corner gaskets 53. Each of the four primary gaskets 51 has a length corresponding to the length of the inner side 211 of the respective frame member 21 and hence to the dimensions of the frame opening 22. It is, however, to be understood that one or more corner gaskets could be replaced by corner sections (not shown) formed integrally with a primary gasket or that one rectangular primary gasket (not shown) might encircle the frame opening, replacing all of the primary gaskets and corner gaskets shown in Fig. 2.

The primary gaskets 51 shown in Figs 2-4 each comprises a base part 510, a first projecting part 511, and a second projecting part 512, each extending along the length axis L and along a height axis H.

The base part 510 extends over and covers the exterior side 214 of the frame member 21 from the inner side 211 to the outer side 212, and it is clamped between the adaptor member 24 and the exterior side of the frame member at the inner side. At the outer side 212 an elastic attachment member 513 on the base part 510 has been inserted in a groove in the frame member 21.

The frame member 21 shown is a sandwich structure with two plate members 215 surrounding an insulating core 216 and resting on the roof 10 as seen in Fig. 3. The second projecting part 512 and the adaptor member 24 are each arranged directly above one plate member, so that they may both contribute to supporting the weight of the sash unit consisting of the sash 3 and the pane 4, transferring loads via the plate members to the roof. It is, however, presently preferred that substantially the entire weight of the sash unit is supported by the second projecting part 512. In this embodiment, the insulating core does not have to carry any substantial loads, and as it is covered by the primary gasket 51 it is not exposed to moisture or sunlight. This allows the insulating material to be chosen based on its insulating properties.

The first projecting part 511 and the second projecting part 512 both project from the base part 510, away from the frame member 21, towards the pane 4. The first projecting part 511 is located closer to the inner side 211 than the second projecting part 512 seen along a width axis W, and the second projecting part is in sealing contact with a leg 31 of the sash projecting underneath the pane 4, forming a sealing plane at the outer side 212 of the frame. It is, however, to be understood that the second projecting part could instead be in contact with the interior side 41 of the pane.

In Fig. 4 the first projecting part 511 is here a lip, and the second projecting part 512 has the cross-sectional shape of a square with four inner cavities extending along the length axis L. The four inner cavities are separated from each other by an X-shaped reinforcement inside the second projecting part. The square shape and the cavities provide surface area and compressibility, allowing a good sealing contact with the sash 3. The reinforcement prevents over-compression, allowing the second projecting part to maintain height over the base part 510, thereby keeping a desired distance between the interior side 41 of the pane 4 and the exterior side 214 of the frame member 21. As along as these functions are maintained, the reinforcement and/or the outer shape of the second projecting part may be embodied differently, and it is to be understood that the reinforcement may potentially be left out. As an example, the X-shaped reinforcement has been left out in the second projecting part 512 in Fig. 3, leaving a hollow centre, and the vertical walls are thicker to maintain the load-being capacity.

The secondary gasket 52 also extends along the length axis L of each frame member 21 and comprises an inner gasket part 521, which is in contact with the interior side 41 of the pane, and an elastic attachment member 522 inserted in a groove in the adaptor member 24. The secondary gasket 52 encircles the frame opening 22 entirely, forming an uninterrupted first sealing plane 523 at the inner side 211 of the frame. It thus prevents hot and moist air from the interior 7 of the building from entering a sealing space 50 defined between the first sealing plane formed by the inner gasket part 521 and a second sealing plane 514 formed by the second projecting part 512. The first projecting part 511 divides the sealing space 50, but it does not form a third sealing plane as there is a relief opening 54 between the interior side 41 of the pane and the free edge 5111 of the lip distal to the frame member. The relief opening 54, which is best seen in Fig. 4, and allows air to move from the part 501 of the sealing space 50 located between the first projecting part 511 and the second projecting part 512 and the part 502 of the sealing space located between the first projecting part 511 and the secondary gasket 52. In the embodiment shown, the first projecting part 511 is an elastic lip projecting at an acute angle relative to the base part 510, towards the inner side 211 of the frame. This angling may counter an over-pressure in the part 502 of the sealing space located between the first projecting part 511 and the secondary gasket 52. The main function of the first projecting part 511 is, however, to divide the sealing space 50 to increase the U-value of the roof window.

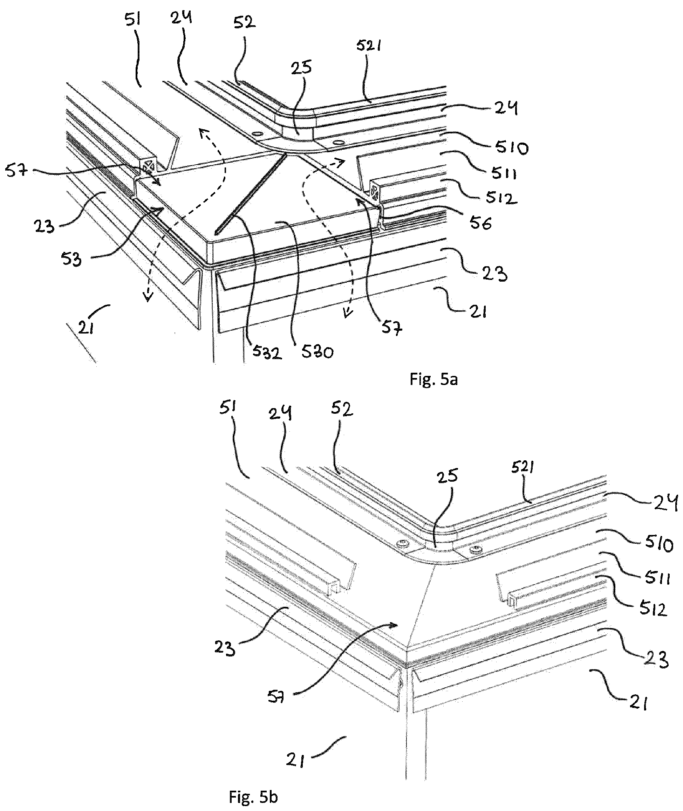

Turning now to Fig. 5a, the corner marked V in Fig. 2 is shown in detail. As may be seen, the two adaptor members 24 are slightly shorter than the primary gaskets 51 and interconnected by an adaptor member connector 25. The secondary gasket 52 may be one coherent gasket passing over adaptor member connector 25 or the adaptor member connector may be provided with a gasket part extending in continuation of separate secondary gaskets on either side. The former is presently preferred as it eliminates the risk of vapour leaks at connections between the gasket part on the adaptor member connector and the separate secondary gaskets.

As is seen both in Fig. 2 and Fig. 5a, the primary gaskets 51 are interrupted at the joint with the corner gasket 53. In embodiment, where the corner gasket and the primary gasket are formed in one, only the first and second projecting parts 511, 512 or only the second projecting part could be interrupted. It is to be understood that the first and second projecting parts might then extend further than shown in the drawing, and that they might have different lengths. The interruption of at least the second projecting part 512 entails an interruption of the sealing space 50, which in turn allows any water having reached into the sealing space or condensed therein to be drained off.

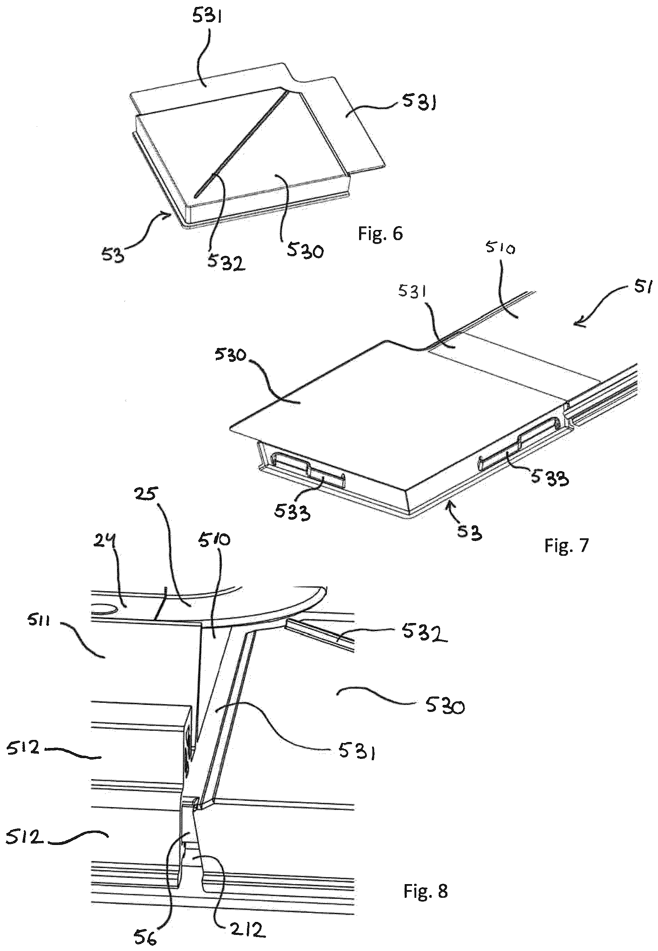

As seen in Fig. 6 and Fig. 7, the corner gasket 53 is provided with flanges 531 configured for extending underneath the primary gaskets 51 to establish a waterproof joint.

In Fig. 5a and Fig. 7 the flanges 531 are located slightly below the exterior surface of the main body 530 of the corner gasket 53, and there is a small distance between the primary gasket and the main body of the corner gasket. This forms drainage gaps 56 between the primary gaskets 51 and the main body 530 of the corner gasket 53. One such gap is shown in more detail in Fig. 8. This drainage gap allow water to be drained off the sealing system 5 onto the outer sides 212 of the frame members 21.

In the embodiment shown, a diverter in the form of a ridge 532 extends diagonally across the corner gasket 53. This diverter will hinder water movement across the surface of the corner gasket. The corner gasket is further provided with elastic attachment member 533 configured for insertion in the same groove in the frame 2 as the attachment members 513 of the primary gaskets 51.

The open ends of the sealing spaces 50 caused by the interruption of the primary gaskets 51 in combination with the open space above the corner gasket 53 forms a ventilation passage 57 allowing air exchange between the sealing spaces and the exterior. The diverter 532 may contribute to guiding air over the corner gasket 53, and in the embodiment shown air will follow the general paths indicated by broken line arrows in Fig. 5a. Ventilation of the sealing space 50 may dry out any water having reached into or condensed in the sealing space, and it may further remove vapour, thus reducing the risk of condensation. Such ventilation will be driven primarily by thermal gradients over the roof window and will thus be at its highest when the temperature in the interior 7 of the building is considerable higher or lower than the exterior temperature. This is advantageous in that these are also the situations where the risk of the formation of condensation is the highest.

An alternative embodiment without a separate corner gasket is shown in Fig. 5b. Here too a separate primary gasket 51 extends along each frame member 21, but each of these primary gaskets has a length along the outer sides of the respective frame member corresponding to the length of the outer side, and their ends extend at a 45-degree angle so that they meet in a mitre joint. Only the base parts 50 extend all the way to the ends, whereas the first projecting parts 511 and the second projecting parts 512 are interrupted so that a ventilation passage 57 of the same size as that in Fig. 5a is formed. It is to be understood that the first and second projecting parts could extend further, creating a smaller ventilation passage, or be shorter, creating a larger ventilation passage, and/or that the first projecting parts and the second projecting parts could be interrupted at different locations. It would also be possible interrupt only the second projecting parts 512. Still further, it is possible to remove only a section of the first projecting parts 511 and/or the second projecting parts 512 along the height axis, for example reducing the height of the first projecting by 50% and removing the second projecting part entirely.

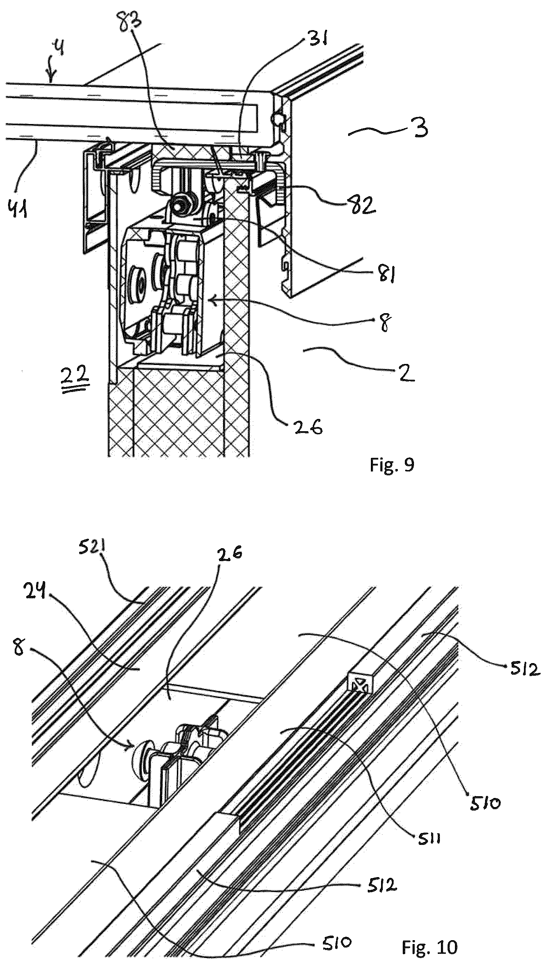

Roof windows of the type shown in Fig. 1 are often very large with heavy sash units and often installed out of the reach of user of a building. The roof window 1 is therefore provided with a motor driven operator 8 housed in an upwards open cavity 26 in the frame 2 as shown in Fig. 9. To open the roof window, this operator 8 comprises a chain 81 pushing on a bracket 82 connected to the leg 31 of the sash 3 projecting along the interior side 41 of the pane 4. A pressure pad 83 is arranged between the bracket 82 and the interior side of the pane to distribute loads. It is to be understood that the chain operator is just one example of an operator and that others may be used. Many suitable operators are known to the skilled person and will therefore not be described in detail here.

To make room for the operator 8 and the bracket 82, the primary gasket 51 is partially interrupted as shown in Fig. 10-12. In the embodiment shown, a hole in the base part 510 allows the operator chain 81 to pass through the primary gasket, and a section of the second projecting part 512 has been removed to make room for the bracket 82. The first projecting part 511 is here intact and is simply compressed under the bracket 82 in the closed state of the roof window. This provides structural stability to the primary gasket 51, helping to keep the primary gasket 51 in its intended position on the frame 2, and in the open state of the roof window the first projecting part will deflect dirt and wind from the exterior, thus protecting the operator. It is, however, also possible to interrupt the primary gasket completely at the operator.

The interruption of the second projecting part 512 at the operator 8 provides a ventilation passage having substantially the same function as described with reference to the corners above. This is advantageous since the operator will usually be made from metal and other materials having a high thermal conductivity, resulting in a relatively high risk of condensation at this place in the roof window.

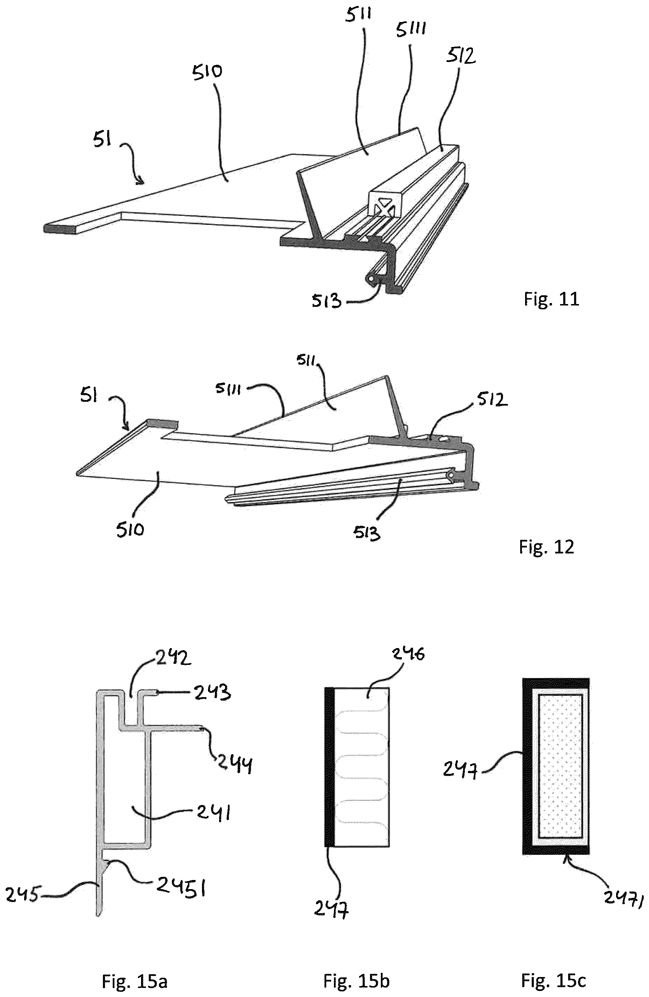

Details of the primary gasket 51 is shown in Fig. 11 and Fig. 12.

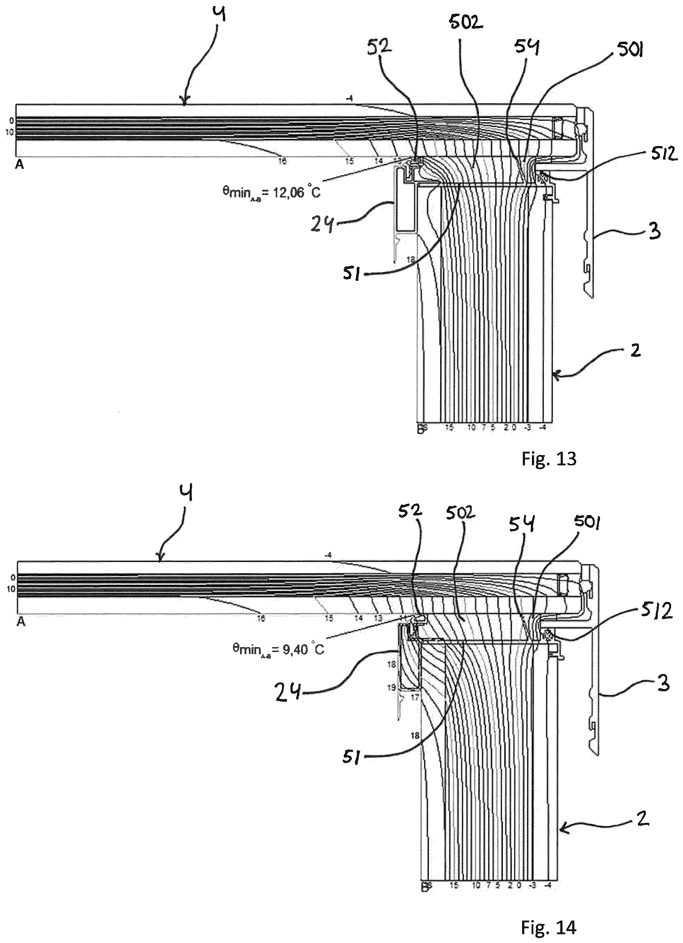

Fig. 13 shows the isotherms in a cross section corresponding to that shown in Fig. 3 of a roof window where the adaptor member 24 is made of an extruded aluminium profile.

The aluminium alloy used for this adaptor member 24 has a thermal conductivity of 160 W/m·K. The pane 4 is a double-layer insulated glass unit with a U-value of 1,1 W/m²/K. The frame 2 is made from a core of expanded polystyrene (EPS), type C60, with a thermal conductivity of 0.033 W/m·K, sandwiched between an inner and an outer layer of softwood having a density of 500 kg/m3.

The temperature of the interior of the building is 20°C and the exterior temperature outside the building is -5°C.

The temperature at the contact point where the secondary gasket 52 is in contact with the pane 4 is 12,06°C and is denominated ^{Θ}min_{A-B} in the drawing. Temperature levels for each isotherm are indicated by small numbers along the edges of the roof window.

Fig. 14 show the isotherms in the same cross section of the roof window as in Fig. 13, and under the exact same conditions of temperature outside and inside the building, placement of the pane 4, and type of pane. The frame 2 is also the same as in Fig. 13. The difference with Fig. 13 is that, in Fig. 14, the adaptor member 24 is made of EPS with a thermal conductivity of 0,033 W/m²/K. This difference results in that the temperature ^{Θ}min_{A-B} at the contact point where the pane 4 is in contact with the secondary gasket 52 is here only 9,40°C, i.e. 2,66°C lower than with the aluminium adaptor member in Fig. 13. This means that the risk of formation of condensation at the contact point is considerably higher in the Fig. 14 embodiment than in the Fig. 13 embodiment.

Fig. 15 shows three different embodiment of adaptor members, all shown in cross-section.

Fig. 15a shows the adaptor member used in Fig. 3 in more detail. This adaptor member consists of an extruded aluminium profile with a cavity at the centre 241. The cavity is here shown as being empty, but it could be filled with another material, such as an insulating material The adapter member further comprises a recess 242 configured for receiving an attachment member of the secondary gasket as shown and described with reference to Figs 2-4. Still further this adaptor member comprises three flanges 243, 244, 245.

The first flange 243 serves as a support for the secondary gasket 52, as seen in Figs 2-4, allowing the gasket to project into the sealing space 50 between frame 2 and the pane 4.

The second flange 244 is configured for extending over and resting on the exterior side 214 of the frame 2 and for clamping the base part 510 of the primary gasket 51 between the second flange and the frame as also described with reference to Figs 2-4. This part may also conduct heat into the sealing space 50 between frame 2 and the pane 4, thereby reducing the risk of condensation forming in the space.

The third flange 245 extends toward the interior in the mounted state as shown for example in Fig. 3 and thus forms a groove between the frame 2 member and the adaptor member 24 for receiving a lining panel. In this embodiment a small projection 2451 is provided for retaining the lining panel. When the exterior temperature is lower than the interior temperature inside the building and the pane 4 is consequently cold, the third flange 245 will conduct heat from the interior of the building towards the pane 4.

Fig. 15b shows an adaptor member 24 composed of a block of insulating material 246 with a plate of a heat conductor component 247 attached to an inner side facing away from the frame 2 in the mounted state and towards the interior of the building. The heat conductor component could for example be made from aluminium and the block could be made from expanded polypropylene (EPP), expanded polyethylene (EPE), expanded polystyrene (EPS), mineral wool, or wood. The block could be provided with a recess corresponding to the recess 242 in Fig. 16a.

Fig. 15c shows a third adaptor member 24 made from an extruded polymer profile having an inner cavity 241 filled with an insulating material, such as a polyurethan foam or one of the materials mentioned above. The profile is cover on the interior side, inner side, and exterior side by a C-shaped heat conductor component 247. Whereas the heat conductor component in Fig. 15a covers only the inner side and transport heat in a direction perpendicular to the pane 4, the heat conductor component 247 in Fig. 15c is configured for also transporting heat in a direction parallel to the pane. This allows it to conduct heat to the sealing space 50 between frame 2 and the pane 4 and towards the inner side 211 of the frame in the mounted state. The inner leg 2471 of the heat conductor component, however, is primarily intended to hide and protect the inner side of the polymer profile.

It is to be understood that the heat conductor component shown in Fig. 15c could also be used on the adaptor member in Fig. 15b and vice versa, that the materials used in the three embodiments described could be combined in different ways.

Aluminium has been described as the preferred material for providing high thermal conductivity and it is the material presently preferred. It is, however, to be understood that the invention is not limited to the use of aluminium.

Aspects of the invention include:
1. A roof window (1) comprising a frame (2), a sash (3), a pane (4), and a sealing system (5),
   where the frame (2) comprises a plurality of frame members (21) delimiting a frame opening (22), each frame member being elongate with a length axis (L) extending along the frame opening, and each frame member having an inner side (211), an outer side (212), an interior side (213), and an exterior side (214), said inner side facing the frame opening, said outer side being opposite the inner side and facing away from the frame opening, said interior side being adapted for facing an interior (7) of a building in a mounted state of the roof window, and said exterior side being opposite the interior side and facing away from the interior of the building in a mounted state of the roof window,
   where the pane (4) is attached to the sash (3) and covers the frame opening (22),
   where the sealing system (5) comprises a primary gasket (51) arranged on the exterior side (214) of at least one frame member (21), extending along the length axis (L) and comprising a base part (510), a first projecting part (511), and a second projecting part (512), said base part extending over and covering the exterior side (214) of at least one frame member (21) from the inner side (211) to the outer side (212), and each of said first projecting part (511) and said second projecting part (512) projecting away from the at least one frame member (21), with the first projecting part (511) being located closer to the inner side (211) than the second projecting part (512), and the second projecting part (512) being in contact with a least one of the sash and the pane, and
   where a relief opening (54) is present at a free edge (5111) of the first projecting part (511) distal to the exterior side (214) of the at least one frame member (21), and
   where the sealing system (5) further comprises an inner gasket part (521) projecting away from the at least one frame member (21), said inner gasket part (521) being in contact with the pane (4) and being located closer to the inner side (211) of the at least one frame member (21) than the first projecting part (511),
   where each of said first projecting part (511), said second projecting part (512) and said inner gasket part (521) extends along the length axis (L), that said inner gasket part (521) encircles the frame opening and forms a first sealing plane (523), in that a sealing space (50) is defined between the first sealing plane and a second sealing plane (514) formed by the second projecting part (512), and in that a ventilation passage (57) extends through the second sealing plane.
2. A roof window (1) according to aspect 1, where the ventilation passage is formed by the second projecting part of the primary gasket being interrupted wholly or partially.
3. A roof window (1) according to aspect 1 or 2, where a separate primary gasket extends along each frame member.
4. A roof window (1) according to aspect 3, where the sealing system (5) further comprises corner gaskets (53).
5. A roof window (1) according to one or more of the preceding aspects, where the sealing system (5) further comprises a secondary gasket (52), and where the inner gasket part (521) forms part of the secondary gasket.
6. A roof window (1) according to one or more of the preceding aspects, where said first projecting part (511) is a lip projecting from the base part (510).
7. A roof window (1) according to one or more of the preceding aspects, where said second projecting part (512) is hollow, comprising an inner cavity extending along the length axis (L).
8. A roof window (1) according to one or more of the preceding aspects, where at least one of a primary gasket, a corner gasket, and a secondary gasket comprises at least one attachment member configured for attachment to the frame (2).
9. A roof window (1) according to one or more of the preceding aspects, where the frame (2) comprises an adaptor member (24) attached at the inner side (211) of the at least one frame member.
10. A roof window (1) according to aspect 9, where the primary gasket is clamped between the adaptor member and a frame member.
11. A roof window (1) according to aspects 5 and 9, where the secondary gasket is attached to the adaptor member.
12. A roof window (1) according to one or more aspects 9-11, wherein the adaptor member (24) comprises a heat conductor component made from a material having a thermal conductivity between 30-430 W/m·K, more preferably between 90-350 W/m·K, but even more preferably between 150-300 W/m·K.
13. A roof window (1) according to one or more aspects 9-12, wherein the adaptor member (24) is made of aluminium, copper, or polymers in combination with a high thermal conductivity material.
14. A roof window (1) according to one or more of the preceding aspects, further comprising a set of hinges (6) connecting the sash (3) to the frame (2) and allowing the sash (3) to be moved in relation to the frame (2) between a closed state of the roof window and an open state of the roof window, where the pane (4) covers the frame opening (22) in the closed state of the roof window.
15. A roof window (1) according to one or more of the preceding aspects, further comprising an operator (8) extending between the frame (2) and the sash (3), and where the primary gasket is interrupted at least partially at the operator.

### List of reference numerals

- 1: Roof window
- 10: Roof
- 11: Joint
- 2: Frame
- 21: Frame member
- 211: Inner side
- 212: Outer side
- 213: Interior side
- 214: Exterior side
- 215: Plate member
- 216: Insulating core
- 22: Frame opening
- 23: Cover profile
- 24: Adaptor member
- 25: Adaptor member connector
- 3: Sash
- 31: Leg
- 4: Pane
- 41: Interior side of pane
- 5: Sealing system
- 50: Sealing space
- 501: Part of sealing space
- 502: Part of sealing space
- 51: Primary gasket
- 510: Base part
- 511: First projecting part
- 5111: Free edge
- 512: Second projecting part
- 513: Attachment member
- 514: Second sealing plane
- 52: Secondary gasket
- 521: Inner gasket part
- 522: Attachment member
- 523: First sealing plane
- 53: Corner gasket
- 530: Main body
- 531: Flange
- 532: Diverter
- 533: Attachment member
- 54: Relief opening
- 56: Drainage gap
- 57: Ventilation passage
- 6: Hinge
- 7: Interior of building
- 8: Operator
- 81: Chain
- 82: Bracket
- 83: Pressure pad
- H: Height axis
- L: Length axis
- W: Width axis

## Claims

1. A roof window (1) comprising a frame (2), a sash (3), a pane (4), and a sealing system (5),
where the frame (2) comprises a plurality of frame members (21) delimiting a frame opening (22), each frame member being elongate with a length axis (L) extending along the frame opening, and each frame member having an inner side (211), an outer side (212), an interior side (213), and an exterior side (214), said inner side facing the frame opening, said outer side being opposite the inner side and facing away from the frame opening, said interior side being adapted for facing an interior (7) of a building in a mounted state of the roof window, and said exterior side being opposite the interior side and facing away from the interior of the building in a mounted state of the roof window,
where the pane (4) is attached to the sash (3) and covers the frame opening (22), and
where the frame (2) comprises an adaptor member (24) attached at the inner side (211) of the at least one frame member, the adaptor member being used for fixation of a primary gasket (51) and/or for attachment of a secondary gasket (52).

2. A roof window (1) according to claim 1, where the sealing system (5) comprises a primary gasket (51) arranged on the exterior side (214) of at least one frame member (21), extending along the length axis (L) and comprising a base part (510), a first projecting part (511), and a second projecting part (512), said base part extending over and covering the exterior side (214) of at least one frame member (21) from the inner side (211) to the outer side (212), and each of said first projecting part (511) and said second projecting part (512) projecting away from the at least one frame member (21), with the first projecting part (511) being located closer to the inner side (211) than the second projecting part (512), and the second projecting part (512) being in contact with a least one of the sash and the pane, and
where a relief opening (54) is present at a free edge (5111) of the first projecting part (511) distal to the exterior side (214) of the at least one frame member (21), and
where the sealing system (5) further comprises an inner gasket part (521) projecting away from the at least one frame member (21), said inner gasket part (521) being in contact with the pane (4) and being located closer to the inner side (211) of the at least one frame member (21) than the first projecting part (511),
where each of said first projecting part (511), said second projecting part (512) and said inner gasket part (521) extends along the length axis (L), that said inner gasket part (521) encircles the frame opening and forms a first sealing plane (523), in that a sealing space (50) is defined between the first sealing plane and a second sealing plane (514) formed by the second projecting part (512), and in that a ventilation passage (57) extends through the second sealing plane.

3. A roof window (1) according to claim 2, where the ventilation passage is formed by the second projecting part of the primary gasket (51) being interrupted wholly or partially.

4. A roof window (1) according to claim 2 or 3, where a separate primary gasket (51) extends along each frame member, and where the sealing system (5) preferably further comprises corner gaskets (53).

5. A roof window (1) according to one or more of claims 2-4, where the sealing system (5) further comprises a secondary gasket (52), and where the inner gasket part (521) forms part of the secondary gasket.

6. A roof window (1) according to one or more of claims 2-5, where said first projecting part (511) is a lip projecting from the base part (510), and/or where said second projecting part (512) is hollow, comprising an inner cavity extending along the length axis (L).

7. A roof window (1) according to one or more of the preceding claims, where at least one of a primary gasket (51), a corner gasket (53), and a secondary gasket (52) comprises at least one attachment member configured for attachment to the frame (2).

8. A roof window (1) according to one or more of the preceding claims, where the primary gasket (51) is fixated by the adaptor member (24) by being clamped between the adaptor member and a frame member (21), such as by the adaptor member comprising an exterior leg extending over the exterior side (214) of the frame member and the primary gasket being clamped between the exterior leg and the frame member.

9. A roof window (1) according to claim 8, wherein the exterior leg comprises openings allowing fasteners, such as screws, to be passed through the exterior leg, through the primary gasket (51), and into the frame member (21), or wherein the primary gasket is attached directly to the adaptor member (24), for example by inserting an elastic projection on the primary gasket into an opening in the adaptor member or vice versa.

10. A roof window (1) according to one or more of the preceding claims, where the secondary gasket (52) is attached by the adaptor member (24) by being attached to the adaptor member, such as by extending in a groove in the adaptor member.

11. A roof window (1) according to one or more of the preceding claims, wherein the secondary gasket (52) is provided on an exterior side of the adaptor member (24) facing away from the frame member (21) so that the secondary gasket is elevated above the exterior side of the frame member.

12. A roof window (1) according to one or more of the preceding claims, where the adaptor member (24) is used for receiving a lining panel, for example comprising a leg extending in parallel with and at a distance from the inner side (211) of a frame member (21) thereby forming a groove between a frame member and the adaptor member.

13. A roof window (1) according to one or more of the preceding claims, wherein frame members (21) have a substantially rectangular cross-sectional shape, and wherein one or more adaptor members (24) is/are used for providing the frame (2) with a more complex shape.

14. A roof window (1) according to one or more of the preceding claims, wherein the adaptor member (24) comprises a heat conductor component made from a material having a thermal conductivity between 30-430 W/m·K, more preferably between 90-350 W/m·K, but even more preferably between 150-300 W/m·K, and/or, wherein the adaptor member (24) is made of aluminium, copper, or polymers in combination with a high thermal conductivity material.

15. A roof window (1) according to one or more of the preceding claims, further comprising a set of hinges (6) connecting the sash (3) to the frame (2) and allowing the sash (3) to be moved in relation to the frame (2) between a closed state of the roof window and an open state of the roof window, where the pane (4) covers the frame opening (22) in the closed state of the roof window.
